# EUROPEAN PATENT APPLICATION

(11) **EP 4 105 957 A1**
(43) Date of publication of application: **21.12.2022**
(21) Application number: 21179442.5
(22) Date of filing: 15.06.2021
(51) Int. Cl.: H01H 3/32, H01H 33/24, H01H 33/56, H01H 33/42

(54) **ELECTRIC POWER DISTRIBUTION SWITCHGEAR**

(71) Applicant: ABB Schweiz AG, 5400 Baden (CH)
(72) Inventor: Lohne, Stanley, 3930 Porsgrunn (NO); Homayonifar, Pouria, 3718 Skien (NO); Attar, Elham, 3718 Skien (NO); Talmo, Stale, 3744 Skien (NO); Pettersen, Terje Thingstad, 3734 Skien (NO)
(74) Representative: Zimmermann & Partner Patentanwälte mbB

(57) **Abstract**

It is provided an electric power distribution switchgear 100 including a gas-tight tank 110 having an inner tank volume 115 filled with a dielectric gas; a switching device 120 arranged in the inner tank volume 115; an electrically insulating bar 130 arranged in the inner tank volume 115 and mechanically coupled to the switching device 120, the bar 130 having an axis 135, the axis 135 defining an axial direction z and a radial direction r; an electrically conductive support member 140, the support member 140 having an axially extending support member opening 145 for supporting the bar 130; and a field controller 150 circumferentially surrounding the support member 140 for electrically shielding the support member 140, wherein the bar 130 includes an axial end portion 160 inserted into the support member opening 145, wherein the axial end portion 160 comprises a distal segment 162 and a proximal segment 164 arranged axially adjacent to each other, wherein the distal segment 162 contacts the support member 140 thereby forming an insulator-conductor interface 170 between the distal segment 162 and the support member 140, and wherein the proximal segment 164 is radially recessed with respect to the distal segment 162 thereby forming a radial space 180 separating the proximal segment 164 from the support member 140.

## Description

### TECHNICAL FIELD

The present disclosure relates to an electric power distribution switchgear. More specifically, the present disclosure relates to an electric power distribution switchgear including a gas-tight tank, a switching device, an electrically insulating bar, an electrically conductive support member, and a field controller.

### BACKGROUND

Switchgears are used in electric power systems, with the purpose to control, protect and isolate electric equipment. In distribution networks, switchgears are located both on the high voltage side and the low voltage side of power transformers.

Switchgears used today for medium and/or high voltages are usually gas insulated switchgears (GIS). The insulating gas may be sulphur hexafluoride (SF6) or another insulating gas with lesser global warming potential.

Generally, switchgears for medium/high voltages AC power distribution systems may include a number of modules inside a sealed encapsulation containing an insulating gas. Each module typically includes at least three switching devices, one switching device for each electrical phase.

In gas insulated switchgear, there is the difficulty of reduced electrical withstand level around triple points. Triple points are locations where metal, solid insulator material and insulating gas (or vacuum) meet. An example of a triple point can be found where the electrically insulating shaft for a switching device is inserted into an electrically conductive housing of the switching device and is in contact with, or at least close to, an electrical conductive part of the housing at the opening.

Triple points can be the source of partial discharge that may in turn lead to complete breakdown. Triple points are difficult to avoid in a typical gas insulated switchgear, because insulating materials are required for mechanical support of metal parts at different potentials.

A possible strategy for reducing these issues is to shield the triple point electrically, i.e. providing nearby large metallic surfaces which influence the electric potential in such a way that the electrical stress seen by the triple point is reduced. However, a shield does typically not eliminate all potential difference under any condition, especially if there are further constraints such as compactness limiting the design options for the shield. Therefore even a (partially) shielded triple point may still cause both partial and full discharge.

US 2018/0158630 A1 describes some further details of triple points.

In view of the above, the challenges of triple points would benefit from further improved solutions, such that benefits in at least one of increased switchgear compactness and improved dielectric withstand can be provided.

### SUMMARY

In view of the above, an electric power distribution switchgear is disclosed. Aspects and features thereof are described as follows.

In one aspect, the present disclosure is directed an electric power distribution switchgear including a gas-tight tank having an inner tank volume filled with a dielectric gas; a switching device arranged in the inner tank volume; an electrically insulating bar arranged in the inner tank volume and mechanically coupled to the switching device, the bar having an axis, the axis defining an axial direction and a radial direction; an electrically conductive support member, the support member having an axially extending support member opening for supporting the bar; and a field controller circumferentially surrounding the support member for electrically shielding the support member, wherein the bar includes an axial end portion inserted into the support member opening, wherein the axial end portion includes a distal segment and a proximal segment arranged axially adjacent to each other, wherein the distal segment contacts the support member thereby forming an insulator-conductor interface between the distal segment and the support member, and wherein the proximal segment is radially recessed with respect to the distal segment thereby forming a radial space separating the proximal segment from the support member.

These and other features, aspects and advantages of the present disclosure is further described with reference in the following description and appended claims. The accompanying drawings, which are incorporated in and constitute a part of this disclosure, illustrate the present disclosure, and together with the following description, serve to explain the principles of the present disclosure.

### BRIEF DESCRIPTION OF THE DRAWINGS

So that the manner in which the above recited features of the present invention can be understood in detail, a more particular description of embodiments, briefly summarized above, may be had by reference to embodiments. The accompanying drawings relate to one or more embodiments and are described in the following.
FIG. 1 shows schematically, in cross section, a part of an electric power distribution switchgear according to an embodiment;
FIG. 2 shows schematically, in cross section, a part of an electric power distribution switchgear according to an embodiment;
FIG. 3 shows schematically, in cross section, a part of an electric power distribution switchgear according to an embodiment;
FIG. 4 shows schematically, in cross section, a part of an electric power distribution switchgear according to an embodiment;
FIG. 5 shows schematically, in cross section, a part of an electric power distribution switchgear according to an example useful for understanding the present invention;
FIG. 6 shows schematically, in cross section, a part of an electric power distribution switchgear according to an embodiment;
FIG. 7 shows schematically, in perspective, a part of an electric power distribution switchgear according to an embodiment; and
FIG. 8 shows schematically, in perspective, a part of an electric power distribution switchgear according to an embodiment.

Elements that are the same or represent corresponding or equivalent elements have been given the same reference numbers in the different figures.

### DETAILED DESCRIPTION

Reference will now be made in detail to the various embodiments, one or more examples of which are illustrated in each figure. Each example is provided by way of explanation and is not meant as a limitation. For example, features illustrated or described as part of one embodiment can be used in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment applies to a corresponding part or aspect in another embodiment as well.

Before describing the embodiments shown in the Figures, some discoveries relevant for aspects of the invention and preferred general aspects of the invention are described. As described, the challenges of triple points would benefit from further improved solutions. Beneficially, at least one of increased switchgear compactness and improved dielectric withstand, can be provided.

In a particular example, the dielectric withstand is the dielectric withstand at a connection of a shaft to a (electrically conductive) support member such as a bearing, e.g., supported by the tank.

According to an aspect, the embodiments of the invention may be particularly useful by using a dielectric gas different from SF6 and preferably having a lower global warming potential (GWP) and/or lower dielectric strength than SF6, in particular using a dielectric gas allowing to avoid the use of SF6 with its high global warming potential.

According to a discovery relevant for aspects of the invention, dielectric strength at the connection of the electrically insulating bar to the tank is improved by an electrically insulating bar with a change in cross-section as described herein. Generally, this improvement allows for a high dielectric strength even in the absence of a shield or in the presence of a non-perfect shield (field controller) surrounding the connection, e.g., if spatial restrictions such as the short distance between the tank walls and pole house (housing of a switching device) does not allow a large shield.

Generally, by selecting a particular shape of the bar, the triple point can be moved to a more shielded position (e.g., under a thin field controller).

In an example, the switchgear is a load break switch. The switchgear may be a low- or medium voltage switchgear, e.g., having a rated voltage of at least 1 kV and / or at most 52 kV.

In an example, the electrically insulating bar is an electrically insulating (rotatable) shaft, e.g., arranged for actuating a movable contact of a switch of the switchgear, preferably for actuating a plurality of switches belonging to different electrical phases of the switchgear jointly. In an example, the electrically insulating bar is connected to the tank by a support member (possibly rotatably, e.g., by the support member being a bearing). The support member is an electrically conductive support member and may be supported by the tank, e.g., mounted to the tank, in particular by a side wall of the tank.

Generally, a triple point is formed at the connection of the electrically insulating bar to an electrically conductive element, e.g. a housing of a switching device, the tank (which may be understood as a metal enclosure), a supporting frame arranged inside the tank.

Generally, a triple point may be formed at either or both end portions of the insulating bar (where the insulating bar contacts an electrically conductive element), or at portion(s) of the insulating bar intersecting with a switching device (having an electrically conductive housing or electrically conductive element contacting or near to the insulating bar).

In an example, a triple point is formed at the connection of the electrically insulating bar to the electrically conductive support member, whereby the triple point is a location at which the dielectric gas, the electrically insulating bar and the electrically conducting support member contact each other.

In an example, the switchgear is a gas insulated switchgear. In an example, the dielectric gas is a non-SF6 gas, preferably having a lower global warming potential and/or lower dielectric strength than SF6.

In an example, the switchgear is a compact switchgear. In an example, the switchgear has an outer length in the direction of the bar's axis of less than 2.0 m, preferably less than 1.0 m. These dimensions limit the distance between the field controller and the housing of a switching device. In an example, the field controller extends in the axial direction by an axial length of at most 10.0 cm. A minimum (purely) radial gap between the field controller and the bar is preferably at most 1.0 cm.

The following further discovery is disclosed. In general, even when the high stress region around the connection of the bar to the support member is under control due to the geometry of the insulating bar, is advantageous to also shield against high electrical stress at the triple point.

In general, it is preferable to arrange the field controller such that the distance, in the radial direction, between the bar and the field controller (at the field controller's opening through which the bar is inserted) is dimensioned, so that the high electrical stress of a triple-point or 'triple point zone' can be avoided or ameliorated.

In general, a large gap between the field controller and the insulating bar may be understood to cause a triple point to be unshielded, or be less shielded. In general, a gap between the field controller and the insulating bar may be understood to cause a new 'triple point zone' to be formed in the gap between insulating bar and (the end of or the tip of) the field controller.

In general, the inner radius of the field controller should be small compared to the radius of the bar's distal segment in order to effectively shield the triple point.

Generally these conditions are met by having the bar's radial recess (relative to the distal segment of the bar) extend axially to the axial location at which the field controller has its minimum inner radius and/or is closest to the bar.

According to a preferred aspect, the field controller may have an opening with a radius of at least the radius of the distal segment and at most 2 mm more than the radius of the distal segment. In an example, the field controller has a donut shape.

Generally, it may be understood that rounding corners reduces the electrical stress at the otherwise sharp corners, but not necessarily at the triple point. Generally, it may be understood that by making (an external face of) a field controller large, a triple point will be pushed back behind the field controller (shielded) and hidden.

In general, the present disclosure is relevant to any contact between a bar (fixed or rotatable) and the tank, where the contact may be via a support member which may be un-rotatable or via a mechanical bushing.

In an example, a triple point is at the connection of the bar to an inner surface of the support member (e.g., bearing). In an example, the inner surface of the support member is a circumferential surface of an axial cavity of the support member.

The axial cavity defined by the circumferential surface may have a non-circular cross-section in the plane orthogonal to the axis of the support member. For example, the circumferential surface may have a cross-section that is n-fold rotationally symmetric, where n>2, or polygonal, for example hexagonal. Such a shape may block or prevent a relative rotation between the bar and the support member.

Further details of aspects, embodiments and examples of the present invention resulting from the discoveries made are described herein. Herein, reference signs shown in the figures are included for illustration purposes.

The following description is not limited to the described aspects, embodiments and examples in that each aspect, embodiment and example described herein can be combined with any other aspect, embodiment and example described herein.

According to an aspect, it is provided an electric power distribution switchgear 100 including a gas-tight tank 110 having an inner tank volume 115 filled with a dielectric gas; a switching device 120 arranged in the inner tank volume 115; an electrically insulating bar 130 arranged in the inner tank volume 115 and mechanically coupled to the switching device 120, the bar 130 having an axis 135, the axis 135 defining an axial direction z and a radial direction r; an electrically conductive support member 140, the support member 140 having an axially extending support member opening 145 for supporting the bar 130; and a field controller 150 circumferentially surrounding the support member 140 for electrically shielding the support member 140, wherein the bar 130 includes an axial end portion 160 inserted into the support member opening 145, wherein the axial end portion 160 comprises a distal segment 162 and a proximal segment 164 arranged axially adjacent to each other, wherein the distal segment 162 contacts the support member 140 thereby forming an insulator-conductor interface 170 between the distal segment 162 and the support member 140, and wherein the proximal segment 164 is radially recessed with respect to the distal segment 162 thereby forming a radial space 180 separating the proximal segment 164 from the support member 140.

In an example, the tank is a metal tank. In an example, the tank is electrically conductive. In an example, the tank is electrically grounded.

In an example, the dielectric gas is SF6 (sulphur hexafluoride). SF6 may be understood to be excellent for preventing and dealing with unwanted electric discharges, e.g. arcs.

In an example, the dielectric gas is a non-SF6 gas. In an example, the dielectric gas includes an organofluorine compound selected from the group consisting of: a fluorether, an oxirane, a fluoramine, a fluoroketone, a fluoroolefin, and mixtures and/or decomposition products thereof. In an example, the dielectric gas has a GWP of less than 2300, or less than 150.

In an example, the switching device 120 is used as a switch-disconnector, load break switch or circuit breaker. In an example, the switching device 120 includes an earthing switch.

In an example, the switching device 120 is one of a plurality of switching devices closest to the field controller 150 or closest to the axial end portion 160 of the bar. In an example, no other component is arranged between the switching device 120 and the field controller 150 (except the bar 130).

In an example, the bar 130 is an actuating shaft for actuating a movable contact of the switching device 120. In an example, the bar 130 is a actuatable shaft for actuating a movable contact of a load break switch or a movable contact of an earthing switch.

In an example, the bar includes electrical insulating material. In an example, the bar 130 may include electrical insulating material around a core of non-electrically-insulating material. In an example, the bar 130 may be made of electrical insulating material.

In an example, the axial end portion 160 is shielded by the field controller 150. In an example, the axial end portion 160 is axially further from the centre of the bar 130 than a proximal end of the field controller 150.

In an example, the axial end portion 160 axially overlaps with the support member 140. In an example, the axial extent of the axial end portion 160 overlaps with axial extent of the support member 140.

The axial end portion 160 may be understood to be an axial extent of the bar 130 extending from a first axial position of the bar 130 to an end of the bar 130. The first axial position may be understood to be an axial position of a proximal end of the support member 140 in a plane of the insulator-conductor interface 170 when the bar 130 is inserted into the support member opening 145. The end of the bar 130 may be understood to be the end of the bar 130 that is inserted into the support member opening 145.

The axial end portion 160 may be understood to consist of (only) the proximal segment 164 and the distal segment 162.

The distal segment 162 of the bar 130 may be understood as an axial extent of the bar 130 in contact with the support member 140. The distal segment 162 of the bar 130 may be understood as an axial extent of the bar from an axial position of a distal end of the radial space 180 in a plane of the insulator-conductor interface 170, to an axial end of the bar.

The proximal segment 164 of the bar 130 may be understood to be an axial extent of the bar 130 corresponding to an axial extent of the radial space 180. The proximal segment 164 of the bar 130 may be an axial extent of the bar from an axial position of a proximal end of a surface of the support member 140 in a plane of the insulator-conductor interface 170, to an axial position of a proximal end of the distal segment 162 in a plane of the insulator-conductor interface 170.

The expression 'proximal' may be understood to be situated nearer to the centre of the bar 130, e.g. along a direction parallel to the axis 135 of the bar 130. In an example 'proximal' is axially nearer to the centre of the bar 130.

The term 'distal' may be understood to be situated away from the centre of the bar 130, e.g. along a direction parallel to the axis 135 of the bar 130. In an example, 'distal' is axially further from the centre of the bar 130.

In an example, the bar 130 is arranged entirely within the inner tank volume 115.

In an example, the bar 130 is a non-rotatable bar or a rotatable shaft.

In an example, the support member 140 is made of metal. In an example, the support member opening 145 has a form of a socket or receptacle. In an example, an axis of the support member opening 145 is coincident with the axis 135 of the bar 130.

In an example, the support member 140 is configured to constrain a translation of the bar 130, e.g. a translation in the axial direction z, and/or in the radial direction r.

In an example, the support member 140 includes a surface perpendicular to the axis of the support member opening 145 at a distal end of the support member opening 145.

In an example, the support member opening 145 has a form fitting to a form of the distal segment 162. A form of the support member opening 145 may be understood to include at least one of a shape, size (diameter, axial length), and position of the support member opening 145. A form of the distal segment 162 may be understood to include at least one of a shape, size(diameter, axial length), and position of the distal segment 162.

According to an embodiment, the support member 140 is electrically connected to the tank 110, or at the same potential as the tank 110.

According to an embodiment, the bar 130 is a rotatable shaft.

In an example, support member 140 may be mounted on a frame 210. In an example, frame 210 may be an internal wall, an internal support frame, a part of a wall of the tank 110, or mounted to a wall of the tank 110.

In an example, support member 140 is arranged within the inner tank volume 115 or within the tank 110. In an example, support member 140 is mounted to an internal wall, to an internal support frame, or to an inner plate. In an example, the internal support frame and the inner plate are inside the tank 110. In an example, support member 140 is not in (direct) contact with a wall of the tank 110.

In an example, support member 140 is mounted to a wall of the tank 110. In an example, support member 140 is mounted on an interior side of a wall of the tank 110. In an example, support member 140 is arranged without intersecting the envelope of the tank 110. In an example, the entire support member 140 is arranged within the inner tank volume 115.

In an example, support member 140 is mounted within a wall of the tank 110. In an example, support member 140 is arranged to intersect the envelope of the tank 110. In an example, the support member 140 is arranged to extend through a wall of the tank 110. In an example, support member 140 is arranged partially within the inner tank volume 115 and partially outside the inner tank volume 115.

In an example, the bar 130 is configured to transmit an actuating force to the switching device 120.

In an example, axial end portion 160 of the bar 130 is a freely rotating end of the bar 130. In an example, axial end portion 160 of the bar 130 and support member 140 are rotationally uncoupled. In an example, axial end portion 160 of the bar 130 and support member 140 are translationally coupled. In an example, the support member 140 supports a weight (e.g. of the bar 130, of a switching device 120, of a further switching device) via the axial end portion 160 of the bar 130.

In an example, axial end portion 160 of the bar 130 and support member 140 are rotationally coupled. In an example, axial end portion 160 of the bar 130 is configured to transmit an actuating force from the support member 140 to the switching device 120. In an example, the support member 140 is a mechanical bushing 420 or part of a mechanical bushing 420.

In an example, the support member 140 is integrally formed with the field controller 150. In an example, the support member is separately formed from the field controller 150.

In an example, the field controller 150 is electrically connected to the tank 110. In an example, the field controller 150 is at the same potential as the tank 110.

According to an embodiment, the insulator-conductor interface 170 is exposed to the dielectric gas at a proximal end of the distal segment 162 and/or the radial space 180 is filled with the dielectric gas.

In an example, the insulator-conductor interface 170 has a proximal end and a distal end. The proximal end of the insulator-conductor interface 170 may be understood as an end arranged closer to the centre of the bar 130 (than the distal end). The distal end of the insulator-conductor interface 170 may be understood as an end arranged further from the centre of the bar 130 (than the proximal end).

In an example, the insulator-conductor interface 170 is an interface where the support member 140 contacts the distal segment 162, e.g. where a surface of the support member 140 extending in the axial direction z, contacts a surface of the distal segment 162 extending in the axial direction z.

In an example, the insulator-conductor interface 170 is an interface where the support member 140 contacts the distal segment 162 in a plane (substantially) parallel to the axis 135 of the bar 130. The expression 'substantially parallel' may be understood to be within 10 degrees or within 5 degrees or within 1 degree of being parallel.

In an example, the (circumferential) interface between the distal segment 162 and the support member 140 may not be exactly parallel to the axis 135 of the bar 130. In an example, the plane of the insulator-conductor interface 170 may be understood to include a proximal end point of the distal segment 162 in contact with the support member 140, and to extend parallel to the axis 135 of the bar 130.

According to an embodiment, a triple point 610 at which the electrical insulating distal segment 162, electrically conductive support member 140 and the dielectric gas meet, is arranged at a distance from a proximal end of the support member 140.

In an example, the distance between the triple point 610 and the proximal end of the support member 140 is at least 0.1 mm. In an example, the proximal end of the support member 140 is a proximal end of the surface member in a plane of the insulator-conductor interface 170.

In an example, the proximal end of the support member 140 is not in contact with the bar 130. In an example, the proximal end of the support member 140 is separated from a proximal end of the proximal segment 164 of the bar 130 by the radial space 180.

In an example, the triple point 610 is arranged at a distal end of the radial space 180. In an example, the proximal end of the distal segment 162 is axially adjacent to a distal end of the proximal segment 164.

It may be understood that the radial space 180 results in a lower electrical field stress around the triple point 610, as compared to when the proximal segment 164 is not radially recessed with respect to the distal segment 162 due to the increased gap between the bar 130 and the field controller 150.

According to an embodiment, the radial space 180 has a radial dimension 350 of at least 1 mm and/or an axial dimension 360 of at least 0.1 mm.

The axis 135 of the bar 130 defines an radial direction r. The radial direction r may be understood to be a direction perpendicular to the axis 135 of the bar 130. The radial dimension 350 of the radial space 180 may be understood to be parallel to the radial direction r.

In an example, the radial dimension 350 is defined from an outer surface of proximal segment 164, in a direction perpendicular to a plane of the insulator-conductor interface 170, to an inner surface of the support member opening 145.

In an example, the radial dimension 350 of the radial space 180 is at least 1 mm or at least 3 mm. Accordingly, the narrow gap between the bar and field controller is advantageously increased and the high stress zone is advantageously alleviated.

The axis 135 of the bar 130 defines an axial direction z. The axial direction z may be understood to be a direction parallel to the axis 135 of the bar 130. The axial dimension 360 of the radial space 180 may be understood to be parallel to the axial direction z.

In an example, the axial dimension 360 of the radial space 180 is defined from a proximal end of a surface of the support member 140 in a plane of the insulator-conductor interface 170, to a proximal end of the distal segment 162 in a plane of the insulator-conductor interface 170.

In an example, the axial dimension 360 of the radial space 180 is at least 0.1 mm or at least 2 mm. Accordingly, the triple point is advantageously perfectly moved under the field controller, and the field stress at the triple point suppressed by the field controller.

According to an embodiment, a cross section of the proximal segment 164 is circular.

In an example, when the cross section of the proximal segment 164 is circular, the gap between the bar 130 and the field controller 150 is further increased, relative to a case when the cross section of the proximal segment 164 is not circular, e.g. hexagonal.

Accordingly, the triple point is advantageously perfectly moved under the field controller, and the field stress at the triple point suppressed by the field controller. At the same time, the narrow gap between the bar and field controller is advantageously increased and the high stress zone is advantageously alleviated. Beneficially, at least one of increased switchgear compactness and improved dielectric withstand, is provided.

According to an embodiment, the proximal segment (164) is radially recessed with respect to the distal segment 162 by at most half of a radius 370 of the distal segment 162 and/or an axial extent of the radially recessed proximal segment 164 is such that an axial dimension 360 of the formed radial space 180 is at most half a radius 370 of the distal segment 162.

In an example, the radius of the proximal segment 164 is at least half of the radius 370 of the distal segment 162.

In an example, the radial dimension 350 of the radial space 180 is at most half of the radius 370 of the distal segment 162. In an example, the radial dimension 350 of the radial space 180 is at most 10 mm or at most 7 mm.

In an example, the radial dimension 350 of the radial space 180 is between 1 mm and half of the radius 370 of the distal segment 162, between 3 mm and half of the radius 370 of the distal segment 162, between 1 mm and 10 mm, or between 3 mm and 7 mm.

In an example, an axial extent of the proximal segment 164 is at most half of the radius 370 of the distal segment 162.

In an example, an axial dimension 360 of the radial space 180 is at most half of the radius 370 of the distal segment 162. In an example, an axial dimension 360 of the radial space 180 is at most 10 mm.

In an example, an axial dimension 360 of the radial space 180 is between 0.1 mm and half of the radius 370 of the distal segment 162, between 2 mm and half of the radius 370 of the distal segment 162, between 0.1 mm and 10 mm, or between 2 mm and 10 mm.

In an example, an axial extent of the axial end portion 160 is more than a radius 370 of the distal segment 162. In an example, an axial extent of the axial end portion 160 is at least a diameter of the distal segment 162.

In an example, an axial extent of the support member opening 145 is more than a radius 370 of the distal segment 162. In an example, an axial extent of the support member opening 145 is at least a diameter of the distal segment 162.

The term 'axial extent' may be understood as a size or dimension in the axial direction z, or in a direction parallel to the axis 135 of the bar 130.

In an example, the radial dimension 350 of the radial space 180 is between 1 mm and half of the radius 370 of the distal segment 162, between 3 mm and half of the radius 370 of the distal segment 162, or between 3 mm and 7 mm.

Advantageously, the mechanical strength of the bar is not sacrificed. Beneficially, the bar has mechanical strength to bear a weight of the switching device and/or transmit rotational force to actuate the switching device.

According to an embodiment, the axial end portion 160 is rotationally coupled to an operating lever 430 via the support member 140.

In an example, the bar 130 is rotationally coupled to the support member 140, which in turn is rotationally coupled to an operating lever 430. Alternatively, the operating lever 430 may be an operating mechanism.

In an example, the operating lever 430 is arranged outside of the inner tank volume 115.

The term 'rotationally coupled' may be understood as having angular positions that are dependent on each other, or that an angular position of one is a function of an angular position of the other.

The term 'translationally coupled' may be understood as having linear positions that are dependent on each other or that a linear position of one is a function of a linear position of the other.

According to an embodiment, the bar 130 is mechanically coupled to a movable contact of the switching device 120.

In an example, the bar 130 is mechanically coupled to the movable contact of the switching device 120 at a medial portion 320 of the bar 130.

In an example, a cross section of the medial portion 320 of the bar 130 is non-circular. In an example, a cross section of the medial portion 320 of the bar 130 is n-fold rotationally symmetric, where n>2. In an example, a cross section of the medial portion 320 of the bar 130 is polygonal.

In an example, the term 'mechanically coupled' may be understood as having at least one of a angular position or linear position of a part or a whole of one, dependent on at least a rotational position or translational position of a part or a whole of the other.

In an example, a translational position of the switching device 120 (as a whole), is dependent on a translational position of the bar 130. In an example, a translational position of a movable contact of the switching device 120 is dependent on a rotational position of the bar 130. In an example, the bar 130 transfers a weight of the switching device 120 to the support member 140.

According to an embodiment, an outer surface of the distal segment 162 and an inner surface of the support member opening 145 are fitting in form.

In an example, a shape of the outer surface of the distal segment 162 matching a shape of the inner surface of the support member opening 145. In an example, the bar 130 is rotationally coupled to the support member 140. In an example, the support member 140 is rotationally coupled to an external operating mechanism. In an example, the support member 140 is rotationally coupled to an operating lever 430. Accordingly, the support member 140 may be rotationally coupled to an operating lever 430.

According to an embodiment, a cross sectional shape of the distal segment 162 and/or a cross sectional shape of the support member opening 145 are non-circular.

In an example, the cross sectional shape of the distal segment 162 is n-fold rotationally symmetric, where n>2, e.g. polygonal. In an example, the cross sectional of the support member opening 145 is n-fold rotationally symmetric, where n>2, e.g. polygonal.

Advantageously, an operating force from outside the sealed tank is transmitted by the bar to actuate the switching device. Beneficially, the switching device can be operated from outside the sealed tank.

According to an embodiment, the bar 130 is mechanically coupled to a further movable contact of a further switching device 120 arranged in the inner tank volume 115, wherein a diameter of the bar 130 where the bar 130 is mechanically coupled to the movable contact and to the further movable contact is larger than a diameter of the distal segment 162.

In an example, the bar includes a near-axial-end portion 310. In an example, the near-axial-end portion 310 is axially adjacent to the axial end portion 160. In an example, the near-axial-end portion 310 is adjacent to a proximal end of the axial end portion 160.

In an example, the bar includes a medial portion 320. In an example, the medial portion 320 is axially adjacent to the near-axial-end portion 310. In an example, the medial portion 320 is adjacent to a proximal end of the near-axial-end portion 310.

The bar 130 may be coupled to the movable contact of the switching device 120 indirectly, via an actuating member. In an example the actuating member is arranged within the switching device 120.

In an example, the bar 130 is mechanically coupled to the switching device 120 at the medial portion 320 of the bar 130. In an example, the bar 130 is mechanically coupled to the movable contact of the switching device 120 at the medial portion 320 of the bar 130.

The bar 130 may be coupled to the further movable contact of the further switching device, indirectly, via a further actuating member. In an example the further actuating member is arranged within the further switching device.

In an example, the bar 130 is mechanically coupled to the further switching device at the medial portion 320 of the bar 130. In an example, the bar 130 is mechanically coupled to the further movable contact of the further switching device at the medial portion 320 of the bar 130.

In an example, a cross section of the bar 130 where the bar 130 is coupled to the switching device 120 and/or further switching device is non-circular. In an example, a cross section of the bar 130 where the bar 130 is coupled to the switching device 120 and/or further switching device is n-fold rotationally symmetric, where n>2. In an example, a cross section of the bar 130 where the bar 130 is coupled to the switching device 120 and/or further switching device is polygonal.

In an example, a minimum diameter of the bar 130 where the bar 130 is mechanically coupled to the switching device 120 is equal to the minimum diameter of the bar 130 where the bar 130 is mechanically coupled to the further switching device.

In an example, a minimum diameter of the bar 130 where the bar 130 is mechanically coupled to the movable contact of the switching device 120 is equal to the minimum diameter of the bar 130 where the bar 130 is mechanically coupled to the further movable contact of the further switching device.

In an example a (minimum) diameter of the bar 130 where the bar 130 is mechanically coupled to the switching device 120 or to the movable contact of the switching device 120 is larger than a diameter or maximum diameter of the proximal segment 164.

In an example a (minimum) diameter of the bar 130 where the bar 130 is mechanically coupled to the further switching device or to the further movable contact of the further switching device is larger than a diameter or maximum diameter of the proximal segment 164.

In an example a diameter (or maximum diameter) of the bar 130 where the bar 130 is mechanically coupled to the switching device 120 or to the movable contact of the switching device 120 is equal to a diameter (or maximum diameter) of the distal segment 162.

In an example a diameter (or maximum diameter) of the bar 130 where the bar 130 is mechanically coupled to the further switching device or to the further movable contact of the further switching device is equal to a diameter (or maximum diameter) of the distal segment 162.

Advantageously, torsion in the bar when actuating switches of a plurality of phases is minimal, and phases are switched at the same time. Beneficially, switching is simultaneous between phases.

According to an embodiment, a radius of a first segment 530 of the bar 130, the first segment 530 being arranged between the axial end portion 160 and where the bar 130 is mechanically coupled to the switching device 120, increases in a continuous manner in a direction away from the axial end portion 160.

In an example, a radius of the first segment 530 increases from a radius of the proximal segment to a radius of the bar 130 where the bar 130 is mechanically coupled to the switching device 120. In an example, the bar 130 is mechanically coupled to the switching device 120 at a medial portion 320 of the bar 130.

In an example, a distal end of the first segment 530 is axially adjacent to a second segment 520. In an example, a distal end of the second segment 520 is axially adjacent to the proximal segment 164.

In an example, a radius of the first segment 530 is (substantially) equal to a radius of the second segment 520 and/or to a radius of the proximal segment 164.

In an example, a radius of the second segment 520 is (substantially) equal to a radius of the proximal segment 164. In an example, a radius of the second segment 520 is constant. In an example, a radius of the proximal segment 164 is constant.

According to an embodiment, the first segment 530 has zero axial overlap with the field controller 150.

In an example, an axial extent of the first segment 530 has zero overlap with an axial extent of the field controller 150. Accordingly, the gap between the bar and the field controller is not decreased by an increase in radius of the bar, e.g. at the first segment 530.

According to an embodiment, a cross section of the first segment 530 is circular.

In an example, when the cross section of the first segment 530 is circular, the gap between the bar 130 and the field controller 150 is further increased, relative to a case when the cross section of the first segment 530 is not circular, e.g. hexagonal.

In an example, a cross section of the second segment 520 is circular.

In an example, when the cross section of the second segment 520 is circular, the gap between the bar 130 and the field controller 150 is further increased, relative to a case when the cross section of the second segment 520 is not circular, e.g. hexagonal.

Accordingly, the narrow gap between the bar and field controller is advantageously increased and the high stress zone is advantageously alleviated. Accordingly, even if the bar is increased in thickness, e.g. at the coupling points with the switching devices, an increased gap between the bar and the field controller is advantageously provided. Beneficially, at least one of increased switchgear compactness and improved dielectric withstand, is provided.

According to an embodiment, the field controller 150 comprises a first curved surface 330 proximate to the bar 130 and a radius of curvature 335 of the first curved surface 330 is at most equal to a radius 370 of the distal segment 162, and/or wherein a separation distance in the radial direction r between the field controller 150 and the bar 130 is at most equal to a radius 370 of the distal segment 162.

In an example, the first curved surface includes a first end of the field controller 150 proximate to the bar 130. In an example, the separation distance in the radial direction r between the field controller 150 and the bar is from the first end of the field controller 150 to an outer surface of the bar 130

In an example, the radius of curvature 335 of the first curved surface 330 is at least 1 mm or at least 4 mm. Accordingly, field stress around the support member 140 can be reduced.

In an example, the radius of curvature 335 of the first curved surface 330 is at most equal to a radius 370 of the distal segment 162. In an example, the radius of curvature 335 of the first curved surface 330 is at most 10 mm, at most 6 mm. Accordingly, the profile of the field controller can be minimized whilst still hiding the triple point.

In an example, the radius of curvature 335 of the first curved surface 330 is between 1 mm and a radius of 370 of the distal segment 162, between 1 mm and 10 mm, or between 4 mm and 6 mm.

In an example, the separation distance between the field controller 150 and the bar 130 is at least 1 mm, or at least 3 mm.

In an example, the separation distance between the field controller 150 and the bar 130 is at most equal to a radius 370 of the distal segment 162. In an example, the separation distance between the field controller 150 and the bar 130 is at most 10 mm or at most 7 mm.

In an example, the separation distance between the field controller 150 and the bar 130 is between 1 mm and a radius 370 of the distal segment 162, between 1 mm and 10 mm, or between 3 mm and 7 mm.

Advantageously, the field controller is thin yet still covering the triple point and the gap between the field controller and the bar is sufficient. Beneficially, at least one of increasing switchgear compactness and improved dielectric withstand, is provided.

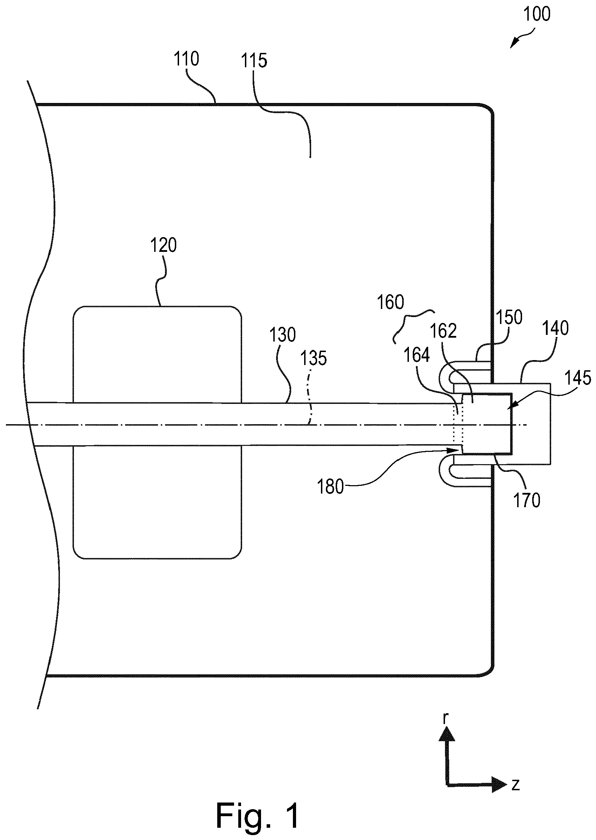

Referring now to the drawings, FIG. 1 shows schematically, in cross section, a part of an electric power distribution switchgear according to an embodiment.

As shown in FIG. 1, an electric power distribution switchgear 100 includes a gas-tight tank 110, a switching device 120, an electrically insulating bar 130, an electrically conductive support member 140, and a field controller 150.

As further shown in FIG. 1, the gas-tight tank 110 has an inner tank volume 115 filled with a dielectric gas, the switching device 120 and the electrically insulating bar 130 are arranged in the inner tank volume 115, the bar 130 is mechanically coupled to the switching device 120 and has an axis 135 defining an axial direction z and a radial direction r, the support member 140 is mounted to the tank 110 and has an axially extending support member opening 145 for supporting the bar 130, and the field controller 150 circumferentially surrounds the support member 140 for electrically shielding the support member 140.

As seen in FIG. 1, the bar 130 includes an axial end portion 160 inserted into the support member opening 145, the axial end portion 160 includes a distal segment 162 and a proximal segment 164 arranged axially adjacent to each other, the distal segment 162 contacts the support member 140 thereby forming an insulator-conductor interface 170 between the distal segment 162 and the support member 140, and the proximal segment 164 is radially recessed with respect to the distal segment 162 thereby forming a radial space 180 separating the proximal segment 164 from the support member 140.

As further seen in FIG. 1, when the bar 130 is inserted into the support member opening 145, the portion of the bar having axial coordinates overlapping with axial coordinates of the support member opening 145 may be understood to form the axial end portion 160.

As depicted in FIG. 1, the distal segment 162 may be understood to be the segment of the axial end portion 160 that contacts the support member 140. The contact between the distal segment 162 and the support member 140 along a plane that is

As further depicted in FIG. 1, the proximal segment 164 may be understood to be the segment of the axial end portion 160 that does not contact the support member 140.

As marked in FIG. 1, an axial direction z may be understood to extend parallel to the axis 135 of the bar 130, while the radial direction r may be understood to extend perpendicular to the axis 135 of the bar 130.

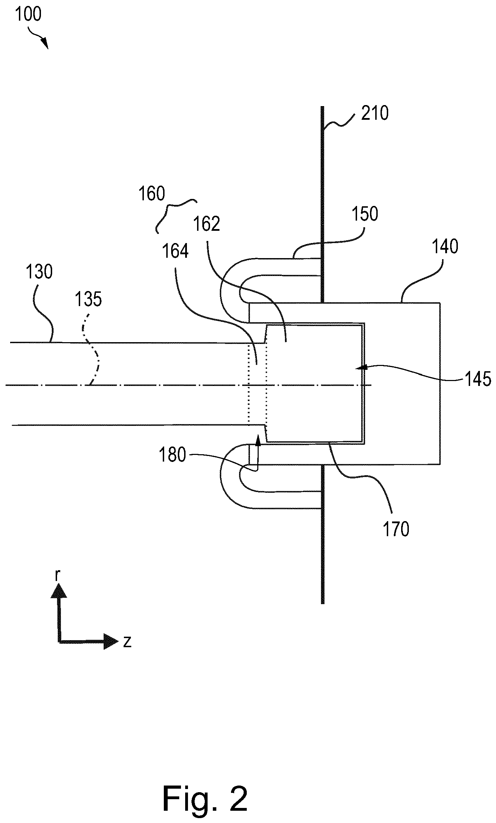

FIG. 2 shows schematically, in cross section, a part of an electric power distribution switchgear according to an embodiment.

As shown in FIG. 2, the radial space 180 may be understood as a space between the proximal segment 164 and the support member 140. In an example, the radial space 180 is axially bounded at the same axial coordinates as the axial bounds of the proximal segment 164.

As further shown in FIG. 2, an axially proximal bound of the radial space 180 and/or proximal segment 164 may be understood to be at the axial coordinate of the proximal end of the support member 140 (which is not in contact with the bar 130), in a plane of the insulator-conductor interface 170. An axially distal bound of the radial space 180 and/or the proximal segment 164 may be understood to be at the axially coordinate of the proximal end of the contact interface between the bar 130 and the support member 140.

As seen in FIG. 2, a proximal end of the proximal segment 164, a proximal end of the radial space 180, and a proximal end of the support member 140 in a plane of the insulator-conductor interface 170 may be understood to be at the same axial position.

As further seen in FIG. 2, a switchgear 100 having a tank 110 with an inner tank volume 115, an electrically insulating bar 130 in the inner tank volume 115, the bar having an axis 135, an electrically conductive support member 140 mounted to the tank 110 and having an axially extending support member opening 145 for supporting the bar 130, and a field controller 150 circumferentially surrounding the support member 140 for electrically shielding the support member 140.

As depicted in FIG. 2, support member 140 may be mounted to a frame 210. Frame 210 may be a frame mounted to a wall of the tank 110. Alternatively, frame 210 may be a part of a wall of the tank 110. Alternatively, frame 210 may be an internal plate, internal support, internal wall or internal frame. Frame 210 may be arranged within the tank 110. Frame 210 may be arranged distant from a wall of the tank 110 or not in contact with a wall of the tank 110.

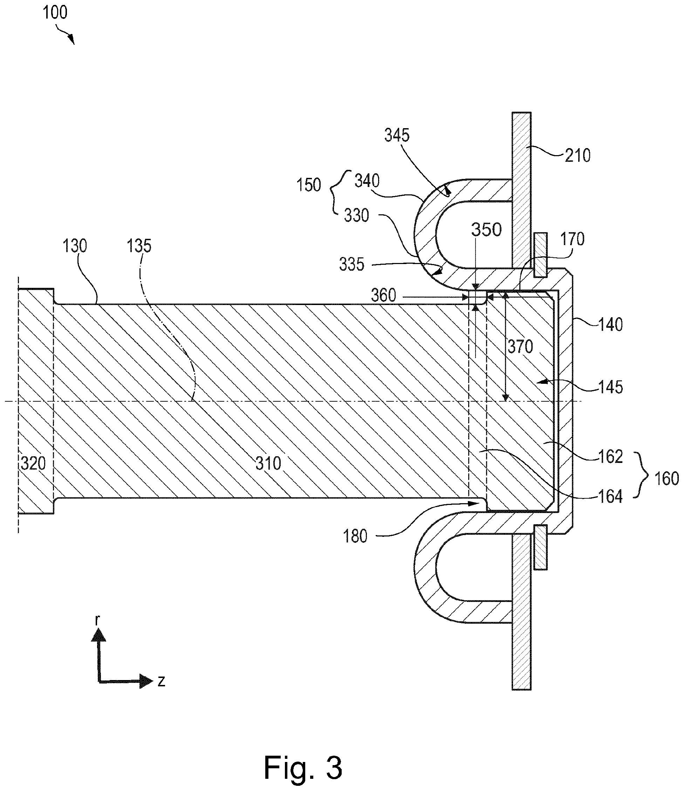

FIG. 3 shows schematically, in cross section, a part of an electric power distribution switchgear according to an embodiment.

As shown in FIG. 3, the bar 130 may include a near-axial-end portion 310 and a medial portion 320.

As further shown in FIG. 3, the field controller 150 may include a first curved surface 330 with a radius of curvature 335, and a second curved surface 340 with a radius of curvature 345.

As seen in FIG. 3, the radial space 180 may be understood to have a radial dimension 350 and an axial dimension 360.

As further seen in FIG. 3, the distal segment 162 may be understood to have a radius 370.

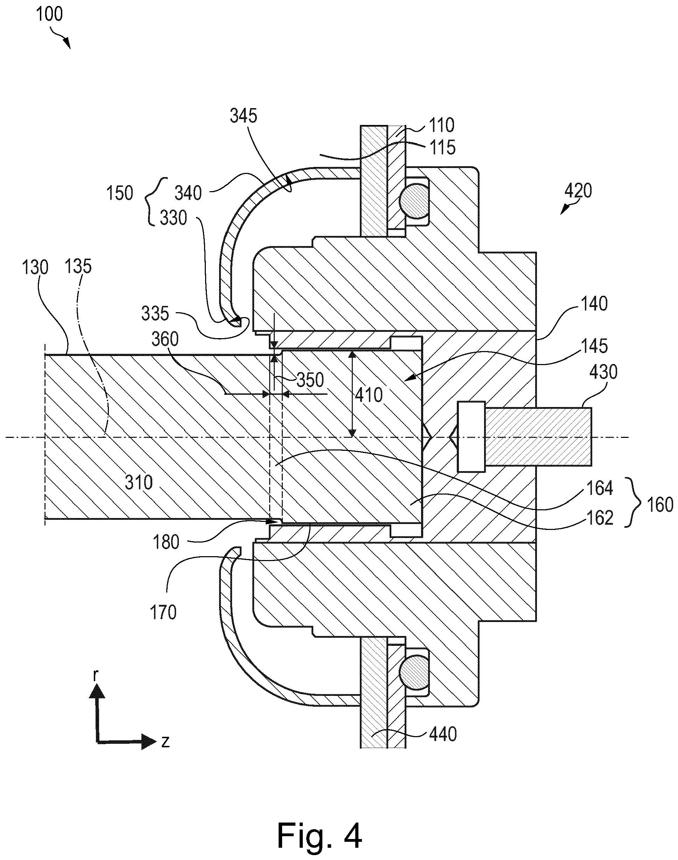

FIG. 4 shows schematically, in cross section, a part of an electric power distribution switchgear according to an embodiment.

As shown in FIG. 4, support member 140 has a support member opening 145. Support member opening 145 may be understood to have a radius 410.

As further shown in FIG. 4, there may be a mechanical bushing 420. Support member 140 may be part of a mechanical bushing 420.

As seen in FIG. 4, the switchgear 100 may include an operating lever 430. Operating lever 430 may be arranged outside of the inner tank volume 115. Operating lever 430 may be configured to transmit an actuating force via support member 140 to the bar 130.

As further seen in FIG. 4, the switchgear 100 may include a field controller fixture 440. Field controller fixture 440 may be configured as a frame or holder for supporting the field controller 150. Field controller 150 may be mounted to the field controller fixture 440. Field controller fixture 440 may be mounted to or supported by a wall of the tank 110.

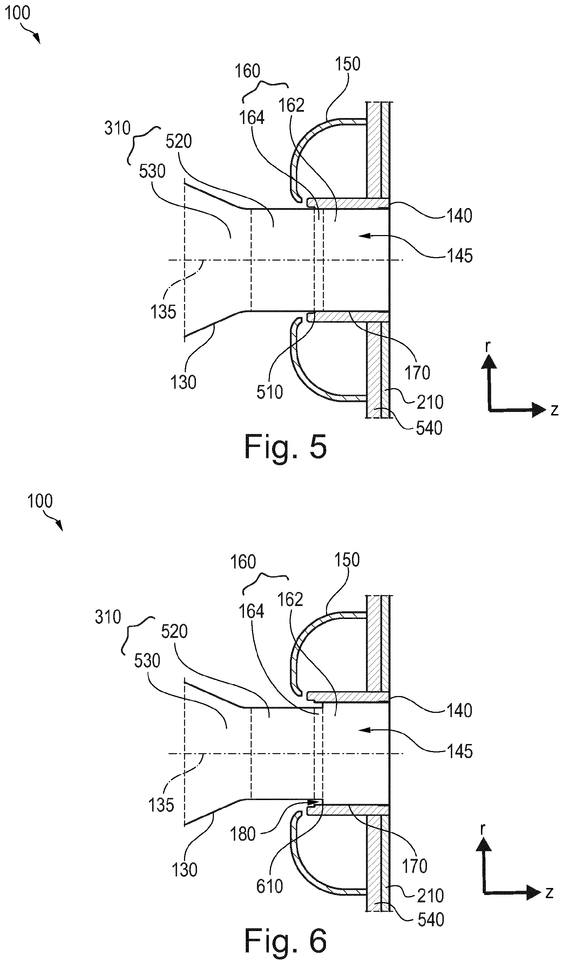

FIG. 5 shows schematically, in cross section, a part of an electric power distribution switchgear according to an example useful for understanding the present invention.

As shown in FIG. 5, the triple point 510 is less shielded by the field controller 150, and the gap between the bar 130 and the field controller 150 is smaller, when the proximal segment 164 is not radially recessed with respect to the distal segment 162, and no radial space separates the proximal segment 164 from the support member 140.

As further shown in FIG. 5, the bar 130 may include a first segment 530 and a second segment 520, where the first segment 530 and the second segment may be of the near-axial-end portion 310.

As seen in FIG. 5, there may be a field controller fixture 540. Field controller fixture 540 may be configured as a frame or holder for supporting the field controller 150. Field controller 150 may be mounted to the field controller fixture 540. Field controller fixture 540 may be mounted to or supported by frame 210. Frame 210 may be an internal plate, internal support, internal wall or internal frame.

FIG. 6 shows schematically, in cross section, a part of an electric power distribution switchgear according to an embodiment.

As shown in FIG. 6, the triple point 610 is better shielded by the field controller 150, and the gap between the bar 130 and the field controller 150 is larger, when the proximal segment 164 is radially recessed relative to the distal segment 162, and a radial space 180 separates the proximal segment 164 from the support member 140.

As further shown in FIG. 6, the bar 130 may include a first segment 530 and a second segment 520, where the first segment 530 and the second segment may be of the near-axial-end portion 310.

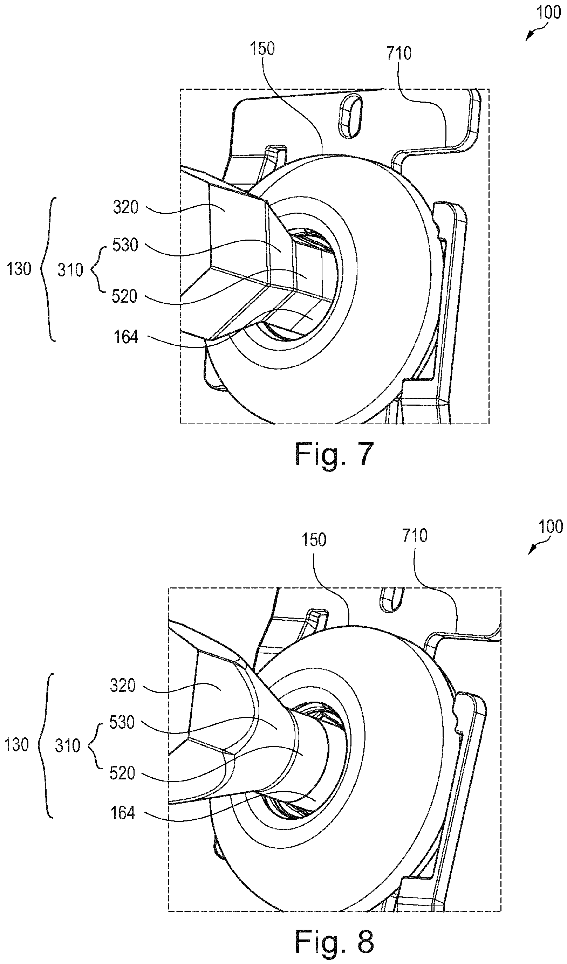

FIG. 7 shows schematically, in perspective, a part of an electric power distribution switchgear according to an embodiment.

As shown in FIG. 7, a diameter of a medial portion 320 of the bar 130 may be larger than a diameter of the proximal segment 164.

As further shown in FIG. 7, a radius of the first segment 530 may increase in a continuous manner in a direction away from the axial end portion 160.

As seen in FIG. 7, the first segment 530 may have zero axial overlap with the field controller 150.

As further seen in FIG. 7, a radius of the second segment 520 may be the same as a radius of the proximal segment 164.

As depicted in FIG. 7, there may be a support fixture 710. Support fixture 710 may be configured as a frame or holder for supporting the field controller 150 and the support member 140 (not shown). Field controller 150 and support member 140 (not shown) may be mounted to the support fixture 710. Support fixture 710 may be mounted to or supported by frame 210 (not shown).

Although not depicted in FIG. 7, support member 140 may be mounted to a frame 210 directly, or via support fixture 710. Support member 140 may a mechanical bushing or a part of a mechanical bushing.

Frame 210 may be a frame mounted to a wall of the tank 110. Alternatively, frame 210 may be a part of a wall of the tank 110. Alternatively, frame 210 may be an internal plate, internal support, internal wall or internal frame. Frame 210 may be arranged within the tank 110. Frame 210 may be arranged distant from a wall of the tank 110 or not in contact with a wall of the tank 110.

FIG. 8 shows schematically, in perspective, a part of an electric power distribution switchgear according to an embodiment.

As shown in FIG. 8, the cross sections the first segment 530, of the second segment 520 and of the proximal segment 164 may be circular.

As further shown in FIG. 8, a cross section of the medial portion 320 may be non-circular.

Further details shown in the figures and provided with reference signs illustrate the foregoing description of aspects, embodiments and examples of the invention, and to which reference is made in the foregoing description.

While the foregoing is directed to specific embodiments, other and further embodiments may be devised without departing from the basic scope thereof, and the scope thereof is determined by the claims that follow.

## Claims

1. An electric power distribution switchgear (100) comprising
- a gas-tight tank (110) having an inner tank volume (115) filled with a dielectric gas;
- a switching device (120) arranged in the inner tank volume (115);
- an electrically insulating bar (130) arranged in the inner tank volume (115) and mechanically coupled to the switching device (120), the bar (130) having an axis (135), the axis (135) defining an axial direction (z) and a radial direction (r);
- an electrically conductive support member (140), the support member (140) having an axially extending support member opening (145) for supporting the bar (130); and
- a field controller (150) circumferentially surrounding the support member (140) for electrically shielding the support member (140), wherein
the bar (130) comprises an axial end portion (160) inserted into the support member opening (145), wherein
the axial end portion (160) comprises a distal segment (162) and a proximal segment (164) arranged axially adjacent to each other, wherein
the distal segment (162) contacts the support member (140) thereby forming an insulator-conductor interface (170) between the distal segment (162) and the support member (140), and wherein
the proximal segment (164) is radially recessed with respect to the distal segment (162) thereby forming a radial space (180) separating the proximal segment (164) from the support member (140).

2. The switchgear (100) according to claim 1, wherein the insulator-conductor interface (170) is exposed to the dielectric gas at a proximal end of the distal segment (162) and/or the radial space (180) is filled with the dielectric gas.

3. The switchgear (100) according to any of the preceding claims, wherein a triple point (610) at which the electrical insulating distal segment (162), electrically conductive support member (140) and the dielectric gas meet, is arranged at a distance from a proximal end of the support member (140).

4. The switchgear (100) according to any of the preceding claims, wherein the radial space (180) has a radial dimension (350) of at least 1 mm and/or an axial dimension (360) of at least 0.1 mm.

5. The switchgear (100) according to any of the preceding claims, wherein a cross section of the proximal segment (164) is circular.

6. The switchgear (100) according to any of the preceding claims, wherein the proximal segment (164) is radially recessed with respect to the distal segment (162) by at most half of a radius (370) of the distal segment (162) and/or an axial extent of the radially recessed proximal segment (164) is such that an axial dimension (360) of the formed radial space (180) is at most half a radius (370) of the distal segment (162).

7. The switchgear (100) according to any of the preceding claims, wherein the axial end portion (160) is rotationally coupled to an operating lever (430) via the support member (140).

8. The switchgear (100) according to any of the preceding claims, wherein the bar (130) is mechanically coupled to a movable contact of the switching device (120).

9. The switchgear (100) according to any of the preceding claims, wherein an outer surface of the distal segment (162) and an inner surface of the support member opening (145) are fitting in form.

10. The switchgear (100) according to any of the preceding claims, wherein a cross sectional shape of the distal segment (162) and/or a cross sectional shape of the support member opening (145) are non-circular.

11. The switchgear (100) according to claim 8, wherein the bar (120) is mechanically coupled to a further movable contact of a further switching device (120) arranged in the inner tank volume (115), wherein a diameter of the bar (120) where the bar (130) is mechanically coupled to the movable contact and to the further movable contact is larger than a diameter of the distal segment (162).

12. The switchgear (100) according to any of the preceding claims, wherein a radius of a first segment (530) of the bar (130), the first segment (530) being arranged between the axial end portion (160) and where the bar (130) is mechanically coupled to the switching device (120), increases in a continuous manner in a direction away from the axial end portion (160).

13. The switchgear (100) according to claim 12, wherein the first segment (530) has zero axial overlap with the field controller (150).

14. The switchgear (100) according to claim 12 or 13, wherein a cross section of the first segment (530) is circular.

15. The switchgear (100) according to any of the preceding claims, wherein the field controller (150) comprises a first curved surface (330) proximate to the bar (130) and a radius of curvature (335) of the first curved surface (330) is at most equal to a radius (370) of the distal segment (162), and/or wherein a separation distance in the radial direction (r) between the field controller (150) and the bar (130) is at most equal to a radius (370) of the distal segment (162).
